# EUROPEAN PATENT SPECIFICATION

(11) **EP 2 059 137 B1**
(45) Date of publication and mention of the grant of the patent: **07.10.2015**
(21) Application number: 07840972.9
(22) Date of filing: 15.08.2007
(51) Int. Cl.: A23L 1/30, A61K 31/202

(54) **PROCESS FOR MANUFACTURING FOOD PRODUCTS WITH OMEGA-3 POLYUNSATURATED FATTY ACIDS**
VERFAHREN ZUR HERSTELLUNG VON LEBENSMITTELPRODUKTEN MIT MEHRFACH UNGESÄTTIGTEN OMEGA-3-FETTSÄUREN
PROCÉDÉ SERVANT À FABRIQUER DES PRODUITS ALIMENTAIRES COMPRENANT DES ACIDES GRAS POLYINSATURÉS OMÉGA-3

(30) Priority: 15.08.2006 US 822408 P
(43) Date of publication of application: 20.05.2009
(73) Proprietor: Kellogg Company, Battle Creek, MI 49016-3599 (US)
(72) Inventor: ORTIZ, Deirdre, Battle Creek, MI 49014 (US); BELLO, Anthony, Carrollton, TX 75006 (US); GAMBINO, Charles, Kalamazoo, MI 49009 (US); GARTER, Barbara, Portage, MI 49024 (US)
(74) Representative: Shanks, Andrew
(86) International application number: PCT/US2007/076007
(87) International publication number: WO 2008/022199

(56) References cited:
- WO-A-99/62356
- WO-A-2007/030718
- DATABASE WPI Week 200125 Derwent Publications Ltd., London, GB; AN 2001-238208 XP002461934 & JP 2001 008667 A (KANEMATSU SHOKUHIN KK) 16 January 2001 (2001-01-16)
- TARRAGO-TRANI ET AL: "New and Existing Oils and Fats Used in Products with Reduced Trans-Fatty Acid Content" JOURNAL OF THE AMERICAN DIETETIC ASSOCIATION, THE ASSOCIATION, CHICAGO, IL, US, vol. 106, no. 6, June 2006 (2006-06), pages 867-880, XP005495641 ISSN: 0002-8223

## Description

### CROSS-REFERENCE TO RELATED APPLICATIONS

### BACKGROUND OF THE INVENTION

### 1. Field of the Invention

The invention relates to a method for producing food products with omega-3 fatty acids in a way that maintains the stability of the omega-3 polyunsaturated fatty acids over extended storage times. In particular, the invention is directed to maintaining stability of the omega-3 polyunsaturated fatty acids eicosapentaenoic acid (EPA) and docosahexaenoic acid (DHA).

### 2. Description of the Related Art

Long chain polyunsaturated fatty acids have been shown to be beneficial to human health. In particular, long chain polyunsaturated omega-3 fatty acids have been shown to be especially beneficial. The three that have been of primary interest include: linolenic acid (18:3w-3); eicosapentaenoic acid (EPA) (20:5w-3); and docosahexaenoic acid (DHA) (22:6w-3). The health benefits associated with enhanced consumption of these omega-3 fatty acids include a lowering of serum cholesterol, reduction of blood pressure, reduction in the risk of heart disease, and a reduction in the risk of stroke. These omega-3 fatty acids are also essential to normal neuronal development and their depletion has been associated with neurodegenerative diseases such as Alzheimer's disease. In the human eye and retina the ratio of DHA:EPA is 5:1 and their presence is necessary for normal eye development. The fatty acid DHA is also believed to be essential for optimal cognitive development in infants. Food fortified with DHA is often called "brain food" in Asian countries. Preliminary studies suggest that long chain polyunsaturated omega-3 fatty acids may play a role in mediating chronic inflammatory assaults and their use by individuals with mild asthma is documented to reduce the severity of the histamine response in asthmatics.

There are several main sources of these beneficial long chain polyunsaturated omega-3 fatty acids. Certain plants provide an abundant source of linolenic fatty acid. Marine animals, such as fish and crustaceans, and marine plants, such as micro algae, are the main sources of EPA and DHA. In particular, fatty fish such as mackerel and salmon contain high levels of EPA and DHA. Marine micro algae contain predominantly DHA. Marine micro algae have an advantage as a source of DHA in that large volumes can be rapidly produced using modem methods and there is no need for the extensive acreage associated with fish farms or the difficulty of fishing. The omega-3 fatty acids are generally found in the form of triglycerides, i.e. one or more of the fatty acids connected to the glycerol backbone is an omega-3 fatty acid, and not in the form of free fatty acids. Both forms have the health benefits and associated oxidative instability. Therefore in this specification and the associated claims no distinction will be made between these two forms of omega-3 fatty acids. In this specification and the claims the term omega-3 fatty acid refers to both forms unless specifically noted otherwise.

The beneficial effects of the omega-3 fatty acids, especially EPA and DHA, require relatively large amounts of the omega-3 fatty acids making it impractical to obtain the recommended daily amount merely by consuming fish. Thus, both have been made available in caplet form. Consumers do not generally enjoy consuming the caplets in part because they are large and also because the caplets can develop a fishy rancid type odor and taste rapidly. Prior attempts to add DHA and/or EPA directly to foods have been unsuccessful because they are very unstable and rapidly give rise to a fishy odor and taste upon oxidation, there by making the food unpalatable. It is believed that DHA and EPA are particularly unstable in the presence of water and heat, therefore their use in foods has been complicated and largely unsuccessful. Unlike other fatty acids these omega-3 fatty acids can not be stabilized in foods merely by adding well known antioxidants to the food.

JP2001-008667 describes the preparation of a fish meat food with an improved flavor by a process comprsing the use of an oil-and-fat composition. Tarrago et al., (J. Am. Diet. Assoc. 2006 June; 106(6):867-80) describes the structure and formation of trans fatty acids in foods. WO2007/030718 describes processes for stabilizing omega-3 fatty acids for use in food products.

WO 99/62356 describes an omega-3 rich human food.

It is desirable to provide a simple process to allow for incorporation of oxidatively unstable fatty acids such as EPA, DHA and linolenic acid into foods that do not involve use of complex stabilizers and processing and that maintain the fatty acids in the unoxidized state.

### SUMMARY OF THE INVENTION

The invention is directed to a process for producing a food product containing at least one omega-3 fatty acid according to claims 1 to 9.

A process for producing a food product containing omega-3 fatty acids is disclosed herein. The process includes the step of directing an edible coating for food through an apparatus operable to convert the coating from substantially solid form to substantially liquid form. The process also includes the step of combining omega-3 fatty acids with the coating at least prior to completion of the directing step. The process also includes the step of maintaining the combined coating and omega-3 fatty acids at a temperature of less than 49 °C (120 degrees Fahrenheit) during the directing step.

### BRIEF DESCRIPTIONS OF THE DRAWINGS

Figure 1 is a perspective view of a first exemplary apparatus for use in the invention;
Figure 2 is an exploded view of portions of the first exemplary apparatus;
Figure 3 is a perspective view of an application head of the first exemplary apparatus;
Figure 4 is a schematic view of an optional aspects of the first exemplary apparatus;
Figure 5 is a perspective view of a second exemplary embodiment for use in the invention;
Figure 6 is a schematic detail view of a longitudinal cross-section of a screw of the second exemplary embodiment; and
Figure 7 is schematic view of a third exemplary embodiment for use in the invention.

### DETAILED DESCRIPTION OF EXEMPLARY EMBODIMENTS

A plurality of different embodiments for use in the invention are shown in the Figures of the application. Similar features are shown in the various embodiments of the invention. Similar features have been numbered with a common reference numeral and have been differentiated by an alphabetic suffix. Also, to enhance consistency, features in any particular drawing share the same alphabetic suffix even if the feature is shown in less than all embodiments. Similar features are structured similarly, operate similarly, and/or have the same function unless otherwise indicated by the drawings or this specification. Furthermore, particular features of one embodiment can replace corresponding features in another embodiment unless otherwise indicated by the drawings or this specification.

The invention relates to processes for producing food products with omega-3 fatty acids,. Two embodiments of the invention are set forth below. Generally, each of the embodiments provide a process for incorporating omega-3 fatty acids that contemplates "gentle" handling of the omega-3 fatty acids to reduce the likelihood that the omega-3 fatty acids will oxidize. From one perspective, control over the temperature of the handling/manufacturing process is enhanced in the exemplary embodiments. For example, a maximum desirable temperature limit of 49 °C (120°F) is established. From a second perspective, control over the mechanical stress experienced by the omega-3 fatty acids is enhanced. For example, gravity is used in part to move an omega-3 fatty acids containing coating to reduce the need to exert excess pressure on the coating to induce movement through the handling/manufacturing system. From a third perspective, control over exposure of the omega-3 fatty acids to oxygen is enhanced. For example, a flow or stream of inert gas can be directed at any point along the system to flush oxygen away from the omega-3 fatty acids, the coating, or the combined omega-3 fatty acids and coating. Individually and cumulatively, these perspectives increase the shelf-life of the coating, whether the coating is applied directly onto another food product such as a bar, or whether the coating is mixed as discrete pieces with other discrete food pieces such as ready-to-eat (RTE) cereal. The invention provides the benefit of increasing the shelf-life of the omega-3 fatty acids containing coating, the shelf-life defined by the time period lasting until the coating exhibits an appreciable fishy odor or taste.

As discussed above marine animals and marine plants are the main sources of EPA and DHA omega-3 fatty acids. The use of fish oils as a source of EPA and DHA is well known. Recently, a number of manufactures have developed processes for growing marine micro algae with high efficiency. These micro algae are a great source of EPA and DHA at very high yields in a completely renewable process. Such micro algae derived EPA and DHA are available from a number of sources. One source of micro algae derived EPA and DHA is Martek Biosciences Corporation, Columbia, MD, USA. A second source of micro algae derived EPA and DHA is Nutrinova Nutrition Specialties and Food Ingredients, DE. The omega-3 fatty acids can be provided as a free flowing powder for the present invention or as a liquid oil, usually including an additional carrier oil. To make the powdered form, typically, the fatty acids are plated onto bulking agents such as corn syrup solids, mannitol, calcium carbonate, whey protein isolate, gluten, pregelatinized starches, cellulose fiber, carbohydrates, gelatin, flour, grain, bran, freeze dried whole fruits and fruit powders. The plated powders are then spray dried to form a free flowing powder. The omega-3 fatty acids can be provided as the free fatty acid or in the form of triglycerides, generally the triglyceride form is more stable. In the present specification and claims unless specifically noted there will be no distinction made between the free form or the triglyceride form of the omega-3 fatty acids or whether the omega-3 fatty acids are used as a powdered form or in the form of a liquid oil.

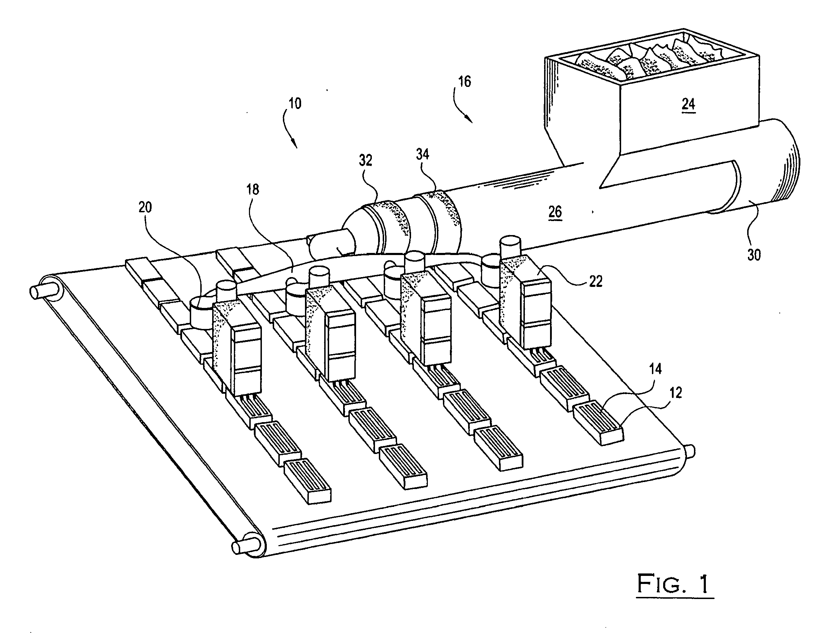

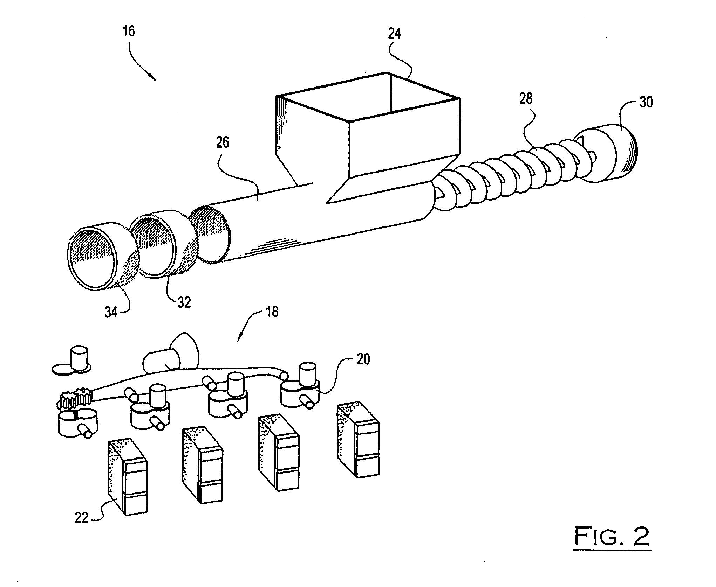

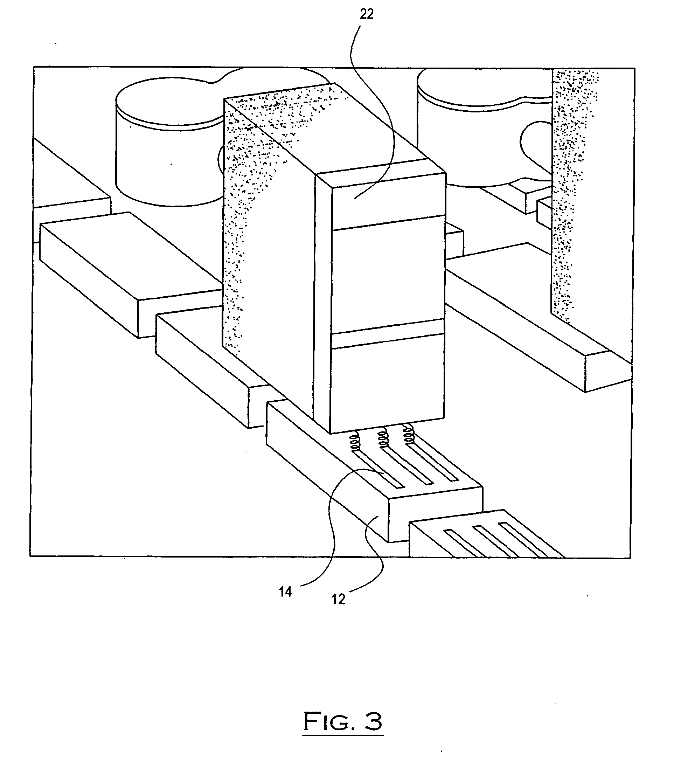

Referring now to Figures 1 - 4, in a first exemplary embodiment of the invention, omega-3 fatty acid is moved through an apparatus 10 and applied to a food product 12. The food product in the first exemplary embodiment of the invention is a snack bar 12. In alternative embodiments of the invention, the food product could be, for example, ready-to-eat (RTE) cereal, toaster pastries, crackers, and/or fruit pieces.

The omega-3 fatty acid is an ingredient of a coating applied to the food product, a coating such as chocolate or a compound coating. Chocolate and compound coating are not necessarily mutually exclusive; a compound coating can include cocoa powder and be chocolate flavored. Generally, a compound coating is a confectionary product based on vegetable fat. For example, the fat can be provided to the compound coating by cocoa butter, palm kernel oil, coconut oil, partially hydrogenated forms of palm kernel oil or coconut oil or soybean oil as some examples. In addition to vegetable fat the confectionary or compound coatings typically contain sugar and may optionally contain flavorings such as cocoa solids, peanut solids, other natural or artificial flavors, emulsifiers, coloring agents, salt, and milk solids.

In the first exemplary embodiment of the invention, a compound coating 14 in the form of solid discrete pieces is liquefied and applied to the snack bar 12. The apparatus 10 is operable to convert the coating 14 in substantially solid form to substantially liquid form for application to a food product or for creation of a discrete piece of omega-3 fatty acid containing coating.

The omega-3 fatty acid is pre-mixed with the other ingredients of the compound coating 14 in the first exemplary embodiment of the invention. However, in alternative embodiments of the invention, the omega-3 fatty acid can be combined with the coating by the apparatus carrying out a process according to the invention, as shown in the second exemplary embodiment of the invention set forth below. In the invention, the omega-3 fatty acid is mixed with the coating at some point prior to the dispensing of the coating from the apparatus.

The first exemplary apparatus 10 includes an auger assembly 16 to convert the coating 14 from substantially solid form to substantially liquid form. In alternative embodiments of the invention, an apparatus for practicing the invention may include structures other than an auger/screw design. Separate components, one for melting/liquefying the coating and one for mixing the omega-3 fatty acid, can be cooperatively engaged to practice the invention. An advantage of a screw/auger arrangement is that the process can be a "first-in, first-out" process whereby the compound coating need not be maintained in liquid form in a vat for extended periods of time. In other words, the apparatus of the first exemplary embodiment of the invention is non-recirculating. However, if this not deemed an advantage in certain operating environments, the invention can be practiced in other ways to achieve different advantages. An apparatus for practicing the invention "starts" when the temperature of the coating is 49 °C (120°F) or less.

The apparatus 10 also includes a distribution manifold 18, a plurality of metering pumps 20, and a plurality of application heads 22. The auger assembly 16 includes a hopper 24 for receiving a mass of the compound coating 14, a tube-like auger housing 26, a screw or auger 28, a drive motor 30, and heating bands 32, 34. The hopper 24 communicates the mass of compound coating 14 to auger housing 26. The auger 28 is disposed in the auger housing 26 for rotation. The motor 30 drives the auger 28 in rotation. In operation, the rotation of the auger 28 draws the compound coating from the hopper 24, through the auger housing 26, and toward the manifold 18.

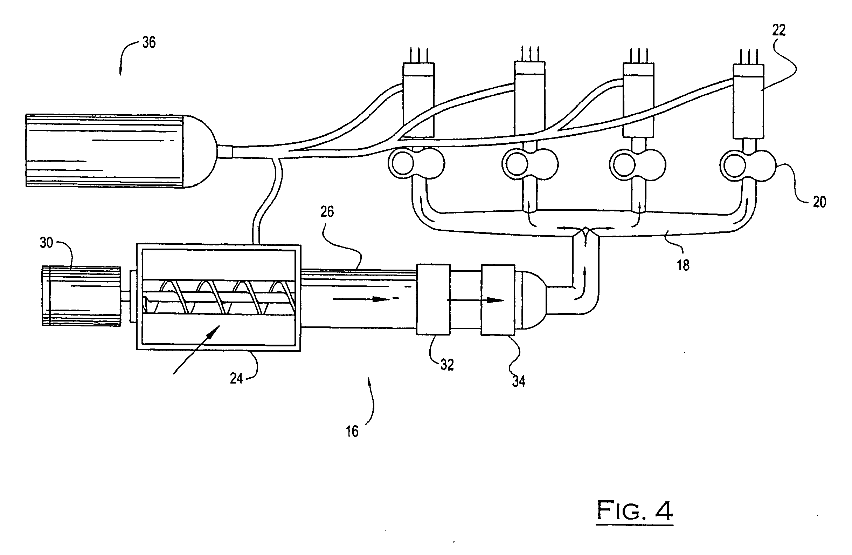

As best shown in Figure 4, the exemplary hopper 24 is constructed with a hollow wall such that a stream of coolant such as water can be directed through the hopper 24, around the compound coating 14 disposed in the hopper 24. The stream of coolant can be any desired temperature to reduce the likelihood of oxidation of the omega-3 fatty acid in the compound coating 14. In the first exemplary embodiment of the invention, the stream of coolant is substantially maintained at a temperature of 10 °C (50°F).

It can be desirable to heat the compound coating slightly to promote passage of the compound coating through the auger assembly 16. Heating changes the compound coating 14 to a molten state and reduces the viscosity of the compound coating 14 and enhances the flow of the compound coating 14. The heating bands 32, 34 are arranged downstream of the hopper 24 along the auger housing 26 to gradually heat the compound coating 14 to about 41 °C (105°F). Heating of the compound coating 14 occurs in the enclosed auger housing 26 portion of the auger assembly 16 and not the open hopper 24.

Maintenance of a desired temperature at any position along the auger assembly 16 can be controlled or enhanced by application of a water bath at the desired temperature.

The compound coating 14 moves from the auger assembly 16 to the distribution manifold 18. Although not shown in the drawings, the manifold 18 can be heated as desired to raise the temperature of the compound coating 14. Alternatively, the temperature of the compound coating 14 can be maintained between 38 °C (100°F) and 43 °C (110°F) throughout the apparatus 10 from the auger housing 26 to the application heads 24.

The compound coating 14 moves through the distribution manifold 18 to the plurality of metering pumps 20. The pumps 20 enhance the precision of and control over the flow of compound coating 14 through the application heads 22. The compound coating 14 is dispensed onto the snack bars 12 from the application heads 22. The dispensing heads 22 dispenses the compound coating 14 in the form of line, but alternative embodiments of the invention can include dispensing heads that dispense the omega-3 fatty acid mixture in spray form. In still other embodiments, the omega-3 fatty acid mixture may be dispensed separately from the food item and added

As best shown in Figure 4, the exemplary apparatus 10 also includes a system 36 for delivering inert gas to various locations to further reducing the likelihood that the omega-3 fatty acid will be exposed to oxygen and oxidize. For example, inert gas at greater than atmospheric pressure can be directed to the hopper 24. Inert gas can also be directed to the application heads 22 to enhance the flow of the compound coating 14 out of the heads 22.

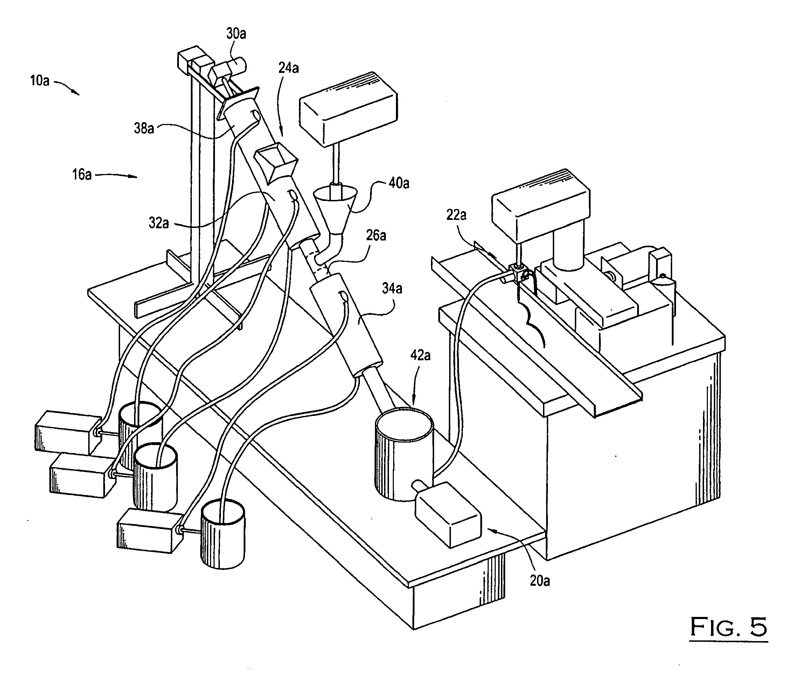

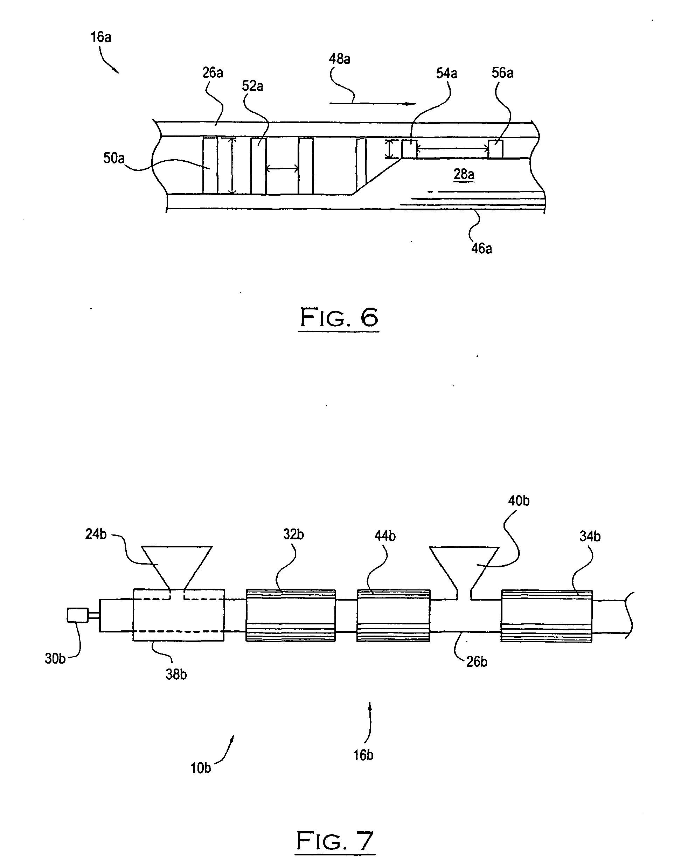

Referring now to Figures 5 and 6, a second exemplary apparatus 10a includes an auger assembly 16a, a metering pump 20a, and an application heads 22a. The auger assembly 16a includes a hopper 24a for receiving a mass chocolate, an auger housing 26a, an auger 28a (shown in Fig. 6), a drive motor 30a, and heating bands 32a, 34a. The hopper 24a communicates the mass of chocolate to the auger housing 26a. The auger 28a is disposed in the auger housing 26a for rotation. The motor 30a drives the auger 28a in rotation. In operation, the rotation of the auger 28a draws the chocolate from the hopper 24a, through the auger housing 26a, and toward the metering pump 20a.

The apparatus 10a includes a cooling band 38a proximate to the hopper 24a. The cooling band 38a can be sleeve-like, surrounding the auger housing 26a, and channeling a flow of cooling fluid such as water around the auger housing 26a. The auger assembly 16a can be cooled at the location of the hopper 24a to reduce the likelihood that the temperature of the hopper 24a will increase and thereby induce melting of the chocolate prior to entry into the auger housing 26a. In the second exemplary embodiment of the invention, the stream of coolant can be substantially maintained at a temperature of 10 °C (50°F).

It can be desirable to heat the chocolate slightly to promote passage of the compound coating through the auger assembly 16a. Heating changes the chocolate to a molten state and reduces the viscosity of the chocolate, thereby enhancing the flow of the chocolate. The heating bands 32a, 34a are arranged downstream of the hopper 24a along the auger housing 26a to gradually heat the chocolate to about 41 °C - 43 °C (105°F - 110°F). Heating of the chocolate occurs in the enclosed auger housing 26 portion of the auger assembly 16a and not the open hopper 24a. The heating bands 32a, 34a, can be sleeve-like, encircling the auger housing 26a and channeling a flow of heating fluid such as water. The bands 32a, 34a, 38a are fed coolant by the pumps and fluid lines shown in Figure 5.

The heating band 32a is disposed substantially immediately upstream of a second hopper 40a. The second hopper 40a communicates with the interior of the auger housing 26a and is operable to receive omega-3 fatty acid in powder form. The omega-3 fatty acid in powder form is encapsulated. Martek Biosciences Corporation of Maryland produces an encapsulated form of omega-3 fatty acid that can be used in embodiments of the invention, such as the product number KSF35D. In alternative embodiments of the invention, omega-3 fatty acid in forms other than powder may be introduced to the interior of the auger housing 26a through the hopper 40a.

In the second exemplary of the invention, the hopper 40a is disposed at a location along the auger housing 26a where the chocolate is not fully melted. The omega-3 fatty acid therefore initially contacts the chocolate at a relatively lower temperature. The combined omega-3 fatty acid and chocolate is further heated by the heat band 34a downstream. Thus, the chocolate is heated in a first stage to first temperature by the band 32a and is heated in a second stage to a second temperature by the band 34a. The first temperature can be between about 38 °C - 41 °C (100°F - 105°F) and the second temperature can be between about 43 °C - 49 °C (110°F - 120°F). As a result of the arrangement of the second exemplary apparatus 10a, the temperature of the omega-3 fatty acid rises gently, with the rise in temperature of the chocolate.

The amount of omega-3 fatty acid added through the hopper 40a can be any amount desired. For example, the amount of omega-3 fatty acid introduced to the auger interior can result in a mixture of omega-3 fatty acid and chocolate that is dispensed on the food product having a ratio of between about 1 milligrams of omega-3 fatty acid per gram of chocolate to about 500 milligrams of omega-3 fatty acid per gram of chocolate.

The heating band 34a is disposed substantially immediately downstream of a second hopper 40a. The heating band 34a gently raised the temperature of the combined omega-3 fatty acid and chocolate to a temperature desirable for dispensing the mixture on a food product and below 49 °C (120°F). The mixture of omega-3 fatty acid and chocolate exits the auger assembly 16a and is received in a reservoir 42a associated with the metering pump 20a.

Alternative embodiments of the invention can incorporate more cooling and/or heating bands. Figure 7 schematically shows a variation in which the chocolate or compound coating is heated and then cooled prior to receiving the omega-3 fatty acid. An apparatus 10b includes a motor 30b and an auger assembly 16b with an auger housing 26b. Heating bands 32b and 34b, cooling bands 38b and 44b, and hoppers 24b and 40b are disposed along the auger housing 26b. This variation may be desirable when chocolate is used to combine with omega-3 fatty acid. For example, to prevent blooming of the chocolate, it may be desirable to heat the chocolate greater than 49 °C (120°F) with the heating band 32b. The cooling band 44b can cool the chocolate prior to combination with the omega-3 fatty acid through the hopper 40b.

Referring again to Figure 6, the screw 28a rotates about a centerline 46a. The coating moves along the centerline 46a in the direction of arrow 48a. The configuration of the thread of the screw 28a changes along the centerline 46a. Portions 50a, 52a of the thread are disposed upstream of portions 54a, 56a. The height of the portions 50a, 52a is greater than the height of the portions 54a, 56a. The distance between the portions 54a, 56a is greater than the distance between the portions 50a, 52a. The operational effect of these differences is that substantially the same quantity of coating (as measured by the cross-section for convenience) can be disposed between portions 50a, 52a as is disposed between portions 54a, 56a. However, the quantity of coating disposed between portions 54a, 56a is less deep and contacts the housing 26a over a greater area than the quantity of coating disposed between portions 50a, 52a. Thus, control over the temperature of the quantity of coating disposed between portions 54a, 56a is enhanced.

The apparatus 10a can be arranged such that the combined coating (chocolate in the second exemplary embodiment of the invention) and omega-3 fatty acid travel together only through the narrowed section of the screw assembly 16a at which the thread of the screw 28a is relative short and widely spaced. In other words, it may be desirable to combine the omega-3 fatty acid with the chocolate to the housing 26a at the point immediately prior to the screw thread becoming short and widely spaced. Alternatively, it may desirable to combine the omega-3 fatty acid with the chocolate to the housing 26a at a point subsequent to the screw thread becoming short and widely spaced so that the temperature of the chocolate is more precisely controlled prior to combining with the omega-3 fatty acid.

Referring to Figure 5, the auger assembly 16a is oriented at a downward angle, the entry point being gravitationally higher than the exit point. This arrangement brings the advantage of reducing mechanical stress on the omega-3 fatty acid. Specifically, gravity is used to reduce and/or eliminate the need to build up positive pressure in the auger housing 16a to move the combined coating and omega-3 fatty acid.

The combined coating produced by the first and second embodiments of the invention is substantially homogenous. The omega-3 fatty acid is generally evenly dispersed in the compound coating. As a result, the output of the system will include some quantity of omega-3 fatty acid at a surface. The output of the system can be a layer disposed on top of, below, or around another edible item. Such a layer will have some quantity of omega-3 fatty acid exposed, not covered by the coating or the other food item. The output of the system could also be a discrete piece, to be added to some other edible product or to be consumed as-is. Such an output will have some quantity of omega-3 fatty acid exposed.

The combined coating and omega-3 fatty acid can be applied to a food bar. In one embodiment, a quantity of the combined coating was applied to a food bar having a water activity of about 0.6. The bar has been subjected to an accelerated shelf life test, at 29 °C (85°F). It has been observed that, currently, the coated bar has not exhibited a fishy aroma and taste after 20 weeks storage. It is believed that the coated bar may not exhibit a fishy aroma and taste after 36 weeks storage.

## Claims

1. A process for producing a food product containing at least one omega-3 fatty acid comprising the steps of:
directing an edible coating for food through an apparatus operable to convert the coating from solid form to liquid form;
combining at least one omega-3 fatty acid selected from the group consisting of docosahexaenoic acid and eicosapentaenoic acid with the coating at least prior to completion of said directing step to create a combined coating;
maintaining the combined coating and the at least one omega-3 fatty acid at a temperature of less than 49°C (120 degrees Fahrenheit) during said directing step to control oxidation of the omega-3 fatty acid in the combined coating; and
dispensing the combined coating and at least one omega-3 fatty acid from the apparatus onto an outer surface of a food product.

2. The process of claim 1 further comprising the steps of:
heating the coating in a first stage from a first temperature at which the coating is in fully solid form to a second temperature at which the coating is in molten form being partially solid and partially liquid;
heating the coating in a second stage from the second temperature to a third temperature at which the coating is in fully liquid form; and
wherein said combining step is further defined as occurring between said step of heating the coating in the first stage and said step of heating the coating in the second stage.

3. The process of claim 1 further comprising the step of:
heating the combined coating and docosahexaenoic acid to a maximum temperature; and
wherein said directing step is further defined as ending immediately after said heating step.

4. The process of claim 1 further comprising the step of:
cooling an entry point of the apparatus.

5. The process of claim 1 wherein said directing step includes the steps of:
moving the combined coating and at least one omega-3 fatty acid through a tube with screw;
heating an outside of the tube to heat the combined coating and at least one omega-3 fatty acid to a maximum temperature during said moving step; and
increasing a diameter of the screw and a distance between threads of the screw along said tube in a direction of movement of the combined coating and at least one omega-3 fatty acid to increase an area contact between the tube and the combined coating and at least one omega-3 fatty acid to thereby enhance control over the temperature of the combined coating and at least one omega-3 fatty acid.

6. The process of claim 1 wherein said directing step includes the steps of:
moving the combined coating and at least one omega-3 fatty acid through a tube with screw; and
orienting the tube at a downward angle such that gravity assists the tube in moving the combined coating and at least one omega-3 fatty acid to reduce mechanical stress on the at least one omega-3 fatty acid and further control oxidation of the omega-3 fatty acid in the combined coating.

7. The process of claim 1 further comprising the step of:
directing a stream of inert gas to the at least one omega-3 fatty acid moving through the apparatus at at least one of an entry point or an exit point of the apparatus to flush oxygen away from the at least one omega-3 fatty acid and further control oxidation of the omega-3 fatty acid in the combined coating.

8. The process of claim 1 wherein said directing step is further defined as:
directing the edible coating for food through a non-recirculating apparatus operable to convert the coating from solid form to liquid form.

9. The process of claim 1 further comprising the step of:
dispensing the combined coating and the at least one omega-3 fatty acid from the apparatus in the form of a plurality of discrete pieces.

## Patentansprüche

1. Verfahren zur Herstellung eines zumindest eine Omega-3-Fettsäure enthaltenden Lebensmittelprodukts, umfassend die Schritte:
Leiten eines essbaren Überzugs für Lebensmittel durch eine Vorrichtung, die dazu betreibbar ist, den Überzug aus fester Form in flüssige Form umzuwandeln;
Kombinieren zumindest einer Omega-3-Fettsäure, ausgewählt aus der aus Docosahexaensäure und Eicosapentaensäure bestehenden Gruppe, mit dem Überzug zumindest vor Abschluss des Leitungsschritts, um einen Kombinationsüberzug zu erzeugen;
Halten des Überzugs und der zumindest einen Omega-3-Fettsäure in Kombination auf einer Temperatur von weniger als 49 °C (120 Grad Fahrenheit) während des Leitungsschritts, um die Oxidation der Omega-3-Fettsäure im Kombinationsüberzug zu kontrollieren; und
Ausgeben des Überzugs und der zumindest einen Omega-3-Fettsäure in Kombination aus der Vorrichtung auf eine äußere Fläche eines Lebensmittelprodukts.

2. Verfahren nach Anspruch 1, weiterhin umfassend die Schritte:
Erhitzen des Überzugs in einer ersten Stufe von einer ersten Temperatur, bei der der Überzug in vollständig fester Form ist, auf eine zweite Temperatur, bei der der Überzug in geschmolzener Form ist, teils fest und teils flüssig seiend;
Erhitzen des Überzugs in einer zweiten Stufe von der zweiten Temperatur auf eine dritte Temperatur, bei der der Überzug in vollständig flüssiger Form ist; und
wobei der Kombinationsschritt weiterhin definiert ist als stattfindend zwischen dem Schritt des Erhitzens des Überzugs in der ersten Stufe und dem Schritt des Erhitzens des Überzugs in der zweiten Stufe.

3. Verfahren nach Anspruch 1, weiterhin umfassend den Schritt:
Erhitzen des Überzugs und von Docosahexaensäure in Kombination auf eine Höchsttemperatur; und
wobei der Leitungsschritt weiterhin als unmittelbar nach dem Erhitzungsschritt endend definiert ist.

4. Verfahren nach Anspruch 1, weiterhin umfassend den Schritt:
Kühlen eines Eintrittspunkts der Vorrichtung.

5. Verfahren nach Anspruch 1, wobei der Leitungsschritt die Schritte einschließt:
Bewegen des Überzugs und der zumindest einen Omega-3-Fettsäure in Kombination durch ein Rohr mit Schnecke;
Erhitzen einer Außenseite des Rohrs zwecks Erhitzens des Überzugs und der zumindest einer Omega-3-Fettsäure in Kombination auf eine Höchsttemperatur während des Bewegungsschritts; und
Vergrößern eines Durchmessers der Schnecke und eines Abstands zwischen Gewinden der Schnecke entlang dem Rohr in einer Bewegungsrichtung des Überzugs und der zumindest einen Omega-3-Fettsäure in Kombination, um einen Bereichskontakt zwischen dem Rohr und dem Überzug und der zumindest einen Omega-3-Fettsäure in Kombination zu vergrößern, um dadurch die Kontrolle über die Temperatur des Überzugs und der zumindest einen Omega-3-Fettsäure in Kombination zu erhöhen.

6. Verfahren nach Anspruch 1, wobei der Leitungsschritt die Schritte einschließt:
Bewegen des Überzugs und der zumindest einen Omega-3-Fettsäure in Kombination durch ein Rohr mit Schnecke; und
Ausrichten des Rohrs in einem Abwärtswinkel so, dass die Schwerkraft das Rohr beim Bewegen des Überzugs und der zumindest einen Omega-3-Fettsäure in Kombination unterstützt, um mechanische Spannung auf die zumindest eine Omega-3-Fettsäure zu reduzieren und die Oxidation der Omega-3-Fettsäure im Kombinationsüberzug weiter zu kontrollieren.

7. Verfahren nach Anspruch 1, weiterhin umfassend den Schritt:
Leiten eines Stroms inerten Gases zu der zumindest einen Omega-3-Fettsäure, die sich durch die Vorrichtung bewegt, an zumindest einem von einem Eintrittspunkt oder einem Austrittspunkt der Vorrichtung, um Sauerstoff von der zumindest einen Omega-3-Fettsäure weg zu spülen und die Oxidation der Omega-3-Fettsäure im Kombinationsüberzug weiter zu kontrollieren.

8. Verfahren nach Anspruch 1, wobei der Leitungsschritt weiterhin definiert ist als:
Leiten des essbaren Überzugs für Lebensmittel durch eine nicht rezirkulierende Vorrichtung, die dazu betreibbar ist, den Überzug aus fester Form in flüssige Form umzuwandeln.

9. Verfahren nach Anspruch 1, weiterhin umfassend den Schritt:
Ausgeben des Überzugs und der zumindest einen Omega-3-Fettsäure in Kombination aus der Vorrichtung, in der Form mehrerer gesonderter Stücke.

## Revendications

1. Procédé servant à produire un produit alimentaire contenant au moins un acide gras oméga-3, comprenant les étapes consistant à :
faire passer un enrobage comestible pour produit alimentaire dans un appareil permettant de transformer l'enrobage d'une forme solide en une forme liquide ;
combiner au moins un acide gras oméga-3, choisi dans le groupe constitué par l'acide docosahexaénoïque et l'acide eicosapentaénoïque, avec l'enrobage au moins avant la fin de l'étape de passage dans l'appareil afin de créer un enrobage combiné ;
maintenir l'enrobage et l'au moins un acide gras oméga-3 combinés à une température de moins de 49 °C (120 degrés Fahrenheit) au cours de ladite étape de passage dans l'appareil afin de maîtriser l'oxydation de l'acide gras oméga-3 dans l'enrobage combiné ; et
appliquer l'enrobage et l'au moins un acide gras oméga-3 combinés provenant de l'appareil sur une surface extérieure d'un produit alimentaire.

2. Procédé selon la revendication 1, comprenant en outre les étapes consistant à :
chauffer l'enrobage, dans un premier temps, d'une première température à laquelle l'enrobage se trouve sous une forme totalement solide à une deuxième température à laquelle l'enrobage se trouve dans une forme fondue, où il est partiellement solide et partiellement liquide ;
chauffer l'enrobage dans un deuxième temps, de la deuxième température à une troisième température à laquelle l'enrobage se trouve dans une forme totalement liquide ; et
dans lequel ladite étape de combinaison est en outre définie par le fait qu'elle se produit entre ladite étape de chauffage de l'enrobage dans le premier temps et ladite étape de chauffage de l'enrobage dans le deuxième temps.

3. Procédé selon la revendication 1, comprenant en outre l'étape consistant à :
chauffer l'enrobage et l'acide docosahexaénoïque combinés à une température maximale ; et
dans lequel ladite étape de passage dans l'appareil est en outre définie par le fait qu'elle se termine immédiatement après l'étape de chauffage.

4. Procédé selon la revendication 1 comprenant en outre l'étape consistant à :
refroidir un point d'entrée de l'appareil.

5. Procédé selon la revendication 1, dans lequel ladite étape de passage dans l'appareil comporte les étapes consistant à :
déplacer l'enrobage et l'au moins un acide gras oméga-3 combinés à travers un tube à vis sans fin ;
chauffer l'extérieur du tube afin de chauffer l'enrobage et l'au moins un acide gras oméga-3 combinés à une température maximale au cours de ladite étape de déplacement ;
et
augmenter un diamètre de la vis sans fin et un pas de la vis sans fin le long dudit tube dans le sens du déplacement de l'enrobage et de l'au moins un acide gras oméga-3 combinés afin d'augmenter la surface de contact entre le tube et l'enrobage et l'au moins un acide gras oméga-3 combinés pour ainsi accroître la maîtrise de la température de l'enrobage et de l'au moins un acide gras oméga-3 combinés.

6. Procédé selon la revendication 1, dans lequel ladite étape de passage dans l'appareil comporte les étapes consistant à :
déplacer l'enrobage et l'au moins un acide gras oméga-3 combinés dans un tube à vis sans fin ; et
orienter le tube à un angle dirigé vers le bas de manière que la gravitation aide le tube dans le déplacement de l'enrobage et de l'au moins un acide gras oméga-3 combinés afin de réduire la contrainte mécanique exercée sur l'au moins un acide gras oméga-3 et de maîtriser davantage l'oxydation de l'acide gras oméga-3 dans l'enrobage combiné.

7. Procédé selon la revendication 1, comprenant en outre l'étape consistant à :
faire passer un courant de gaz inerte vers l'au moins un acide gras oméga-3 traversant l'appareil à au moins un point d'entrée et/ou un point de sortie de l'appareil afin de repousser l'oxygène de l'au moins un acide gras oméga-3 et de maîtriser davantage l'oxydation de l'acide gras oméga-3 dans l'enrobage combiné.

8. Procédé selon la revendication 1, dans lequel ladite étape de passage dans l'appareil est en outre définie par :
le passage de l'enrobage comestible pour produit alimentaire à travers un appareil non recirculant permettant de transformer l'enrobage d'une forme solide en une forme liquide.

9. Procédé selon la revendication 1, comprenant en outre l'étape consistant à :
appliquer l'enrobage et l'au moins un acide gras oméga-3 combinés provenant de l'appareil sous la forme d'une pluralité d'unités distinctes.
